Europäisches Patentamt

European Patent Office

Office européen des brevets

(19)

(11) Numéro de publication: **0 218 532 B1**

(12)

# FASCICULE DE BREVET EUROPEEN

(45) Date de publication de fascicule du brevet:
25.09.91

(51) Int. Cl.⁵: **G11B 5/127**, G11B 5/245, G11B 5/49, //G11B5/31

(21) Numéro de dépôt: 86402193.6

(22) Date de dépôt: 03.10.86

(54) Tête d'enregistrement thermo-magnétique, et procédé de réalisation.

(30) Priorité: 04.10.85 FR 8514766

(43) Date de publication de la demande:
15.04.87 Bulletin 87/16

(45) Mention de la délivrance du brevet:
25.09.91 Bulletin 91/39

(84) Etats contractants désignés:
DE GB NL

(56) Documents cités:
GB-A- 770 127
US-A- 3 438 010
US-A- 3 651 262
US-A- 3 944 992

PATENTS ABSTRACTS OF JAPAN, vol. 3, no.
125 (E-145), 19 octobre 1979, page 94 E 145;
& JP-A-54 103 009

PATENTS ABSTRACTS OF JAPAN, vol. 7, no.
26 (P-172)[1171], 2 février 1983; & JP-A-57 179
907

(73) Titulaire: THOMSON-CSF
51, Esplanade du Général de Gaulle
F-92800 Puteaux(FR)

(72) Inventeur: Lehureau, Jean-Claude
THOMSON-CSF SCPI 19, avenue de Messine
F-75008 Paris(FR)
Inventeur: Castera, Jean-Paul
THOMSON-CSF SCPI 19, avenue de Messine
F-75008 Paris(FR)
Inventeur: Huijer, Ernst
THOMSON-CSF SCPI 19, avenue de Messine
F-75008 Paris(FR)

(74) Mandataire: Lepercque, Jean et al
THOMSON-CSF SCPI
F-92045 PARIS LA DEFENSE CEDEX 67(FR)

Rank Xerox (UK) Business Services

PATENTS ABSTRACTS OF JAPAN, vol. 4, no. 5 (E-165), 16 janvier 1980, page 98 E 165; & JP-A-54 146 620

IBM TECHNICAL DISCLOSURE BULLETIN, vol. 10, no. 4, septembre 1967, pages 420-421, New York, US; D.A. THOMPSON: "Beam-operated memory element"

PATENTS ABSTRACTS OF JAPAN, vol. 6, no. 156 (P-135)[1034], 17 août 1982; & JP-A-57 74 814

PATENTS ABSTRACTS OF JAPAN, vol. 7, no. 54 (P-180)[1199], 4 mars 1983; & JP-A-57 200 918

PATENTS ABSTRACTS OF JAPAN, vol. 7, no. 57 (P-181)[1202], 9 mars 1983; & JP-A-57 203 207

PATENTS ABSTRACTS OF JAPAN, vol. 9, no. 24 (P-331)[1747], 31 janvier 1985; & JP-A-59 168 954

## Description

L'invention concerne une tête d'enregistrement thermo-magnétique et son procédé de réalisation particulièrement bien adapté à la réalisation de piles de têtes magnétiques d'enregistrement au pas très serré.

La tête d'enregistrement de l'invention trouve une application particulièrement interessante dans les dispositifs nécessitant un enregistrement d'informations de grande densité, que ce soit un enregistrement parallèle d'informations ou un enregistrement séquentiel. Une telle tête peut être, par exemple, appliquée dans un dispositif d'enregistrement sur bande magnétique.

Une tête magnétique doit développer en règle générale un champ de l'ordre de 1000 Oe, soit 80 mA/micromètre. Un tel champ est difficilement réalisable par une seule spire de courant, il y a nécessité de réaliser un bobinage. Aussi une tête, même réalisée en couche mince est un dispositif qui ne peut être intégré à un pas inférieur à 100 micromètres, ce qui est insuffisant pour un enregistrement de grande densité.

Des solutions acoustiques ont été proposées, mais elles n'offrent pas la résolution nécessaire. En effet, une résolution de 10 micromètres correspondrait à une bande passante acoustique de 200 MHz au minimum, or les effets magnétostrictifs ne suivent pas cette fréquence là.

Les effets thermo-magnétiques offrent des cadences élevées pouvant atteindre 1 MHz et permettant une intégration au pas typique de 10 micromètres dans des dispositifs à fonctionnment par effet joule et de 1 micromètre dans des dispositifs à fonctionnement par imagerie optique.

On connait de tels dispositifs dont le support d'enregistrement présente une température de point de Curie relativement basse et permet un enregistrement par effet thermo-magnétique.

Mais de tels dispositifs nécessitent un support d'enregistrement adapté pour présenter une telle température de point de Curie.

L'invention se fixe pour but de pallier les insuffisances de l'Art Connu.

L'invention permet des enregistrements utilisant l'effet thermo-magnétique sur des supports magnétiques, tels que bandes magnétiques, de qualité courante et dont la température de point de Curie n'est pas nécessairement faible.

L'invention a donc pour objet une tête d'enregistrement thermo-magnétique comprenant un support magnétique d'enregistrement d'informations, caractérisée en ce qu'elle comporte : une couche en matériau ferromagnétique à température de point de Curie déterminée, magnétisée de manière homogène, dont l'épaisseur est délimitée par une première face principale et une deuxième face principale, ladite couche étant disposée avec sa première face principale placée à proximité du support magnétique d'enregistrement et parallèlement à ce support magnétique ; ainsi qu'au moins une source lumineuse disposée du côté de la deuxième face principale de ladite couche, émettant un faisceau lumineux vers cette deuxième face, et permettant d'élever la température d'une zone dans toute l'épaisseur de la couche à partir de ladite deuxième face principale jusqu'à la première face principale jusqu'à atteindre la température du point de Curie du matériau ferromagnétique constituant la couche, de façon à réaliser dans la couche en matériau ferromagnétique au moins une zone constituant au sein de cette couche, une discontinuité magnétique faisant office d'entrefer.

L'invention concerne également une tête d'enregistrement thermo-magnétique comprenant un support magnétique d'enregistrement d'informations caractérisée en ce qu'elle comporte : une couche en matériau ferromagnétique à température de point de Curie déterminée, magnétisée de manière homogène, dont l'épaisseur est délimitée par une première face principale, et une deuxième face principale, ladite couche étant disposée avec sa première face principale placée à proximité du support magnétique d'enregistrement et parallèlement à ce support magnétique ; ainsi qu'au moins une résistance électrique disposée du côté de la deuxième face principale de ladite couche, et permettant d'élever la température d une zone dans toute l'épaisseur de la couche à partir de ladite deuxième face principale jusqu'à la première face principale jusqu'à atteindre la température du point de Curie du matériau ferromagnétique constituant la couche de façon à réaliser dans la couche en matériau ferromagnétique au moins une zone constituant, au sein de cette couche, une discontinuité magnétique faisant office d'entrefer.

L'invention concerne également un procédé de fabrication d'une tête d'enregistrement thermo-magnétique, caractérisé en qu'il comporte les phases suivantes :
- a) une phase de dépôt d'une couche d'un matériau ferromagnétique sur un substrat ;
- b) une phase de dépôt d'électrodes chauffantes sur une face d'un élément monolithique de circuits intégrés ;
- c) une phase d'assemblage de l'ensemble couche de matériau ferromagnétique - substrat et de l'ensemble électrodes chauffantes - élément monolithique, avec la couche de matériau ferromagnétique en contact aveo les électrodes chauffantes ;
- d) une phase d'élimination du substrat.

L'invention va être détaillée dans la description qui va suivre, faite en se reportant aux figures annexées qui représentent :

- la figure 1, une disposition simplifiée de la tête d'enregistrement thermo-magnétique selon l'invention ;
- les figures 2 et 3, un exemple de fonctionnement de la tête de la figure 1 ;
- la figure 4, une vue en perspective d'un exemple de réalisation de la tête d'enregistrement de l'invention utilisant des sources lumineuses ;
- la figure 5, une vue en plan de la tête d'enregistrement de la figure 4 ;
- la figure 6, une vue en plan d'un deuxième exemple de réalisation de la tête d'enregistrement de l'invention utilisant une source lumineuse ;
- la figure 7, une vue en plan d'un troisième exemple de réalisation de la tête d'enregistrement de l'invention utilisant une source lumineuse ;
- la figure 8, une vue en perspective d'un exemple de réalisation de la tête d'enregistrement de l'invention utilisant des électrodes de chauffage ;
- les figures 9 à 13, des configurations de formes d'électrodes de chauffage utilisable dans la tête d'enregistrement représentée en figure 8 ;
- la figure 14, une tête d'enregistrement montée selon l'invention sur un élément monolithique de circuits intégrés ;
- la figure 15, un procédé de réalisation de la tête d'enregistrement de la figure 14 ;
- les figures 16 à 19, des variantes de fonctionnement de la tête d'enregistrement selon l'invention.

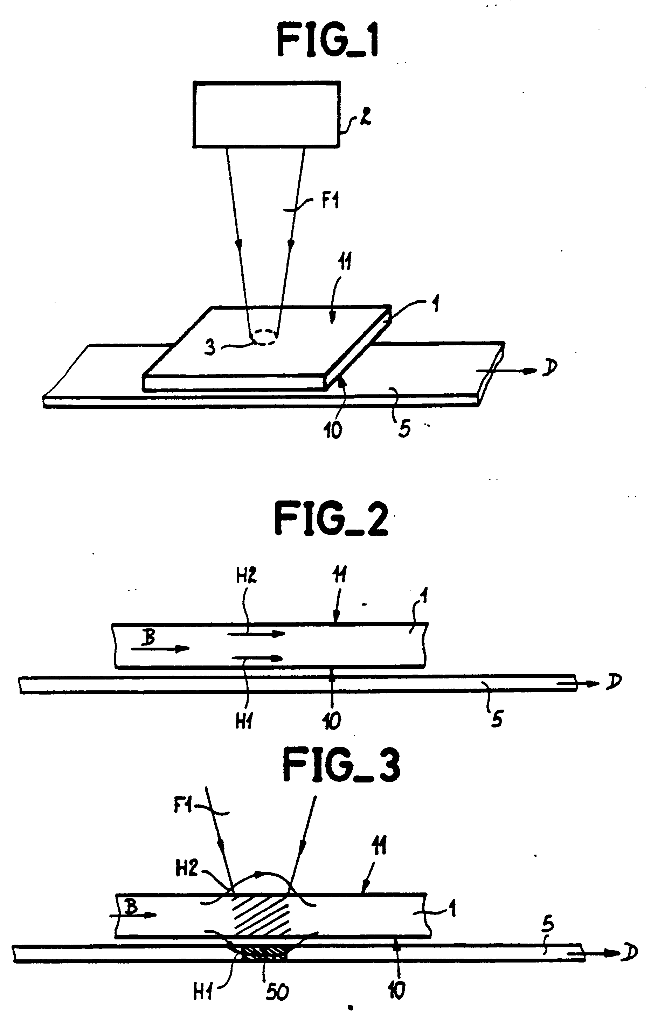

En se reportant à la figure 1, on va tout d'abord décrire une disposition simplifiée de la tête d'enregistrement selon l'invention.

Cette tête d'enregistrement comporte une couche d'un matériau ferromagnétique 1 posèdant une première face principale 10 et une deuxième face principale 11 parallèle à la première. Cette couche 1 est placée à proximité d'un support d'enregistrement magnétique, représenté sous forme d'une bande-magnétique 5 sur la figure 1, avec la première face 10 frolant, voir touchant, la bande magnétique 5. Une source lumineuse 2 projette un faisceau lumineux F1 sur la deuxième face principale 11 de la couche 1. Ce faisceau provoque, dans la zone de projection 3 de la face 11, un échauffement en profondeur de la couche 1.

Le matériau constituant la couche 1 est magnétisé uniformément selon le plan de la couche. Sa température de point de Curie est relativement faible, sa valeur est par exemple 100°. On sait qu'un tel matériau aimanté à une valeur déterminée perd son aimantation lorsqu'on le chauffe jusqu'à atteindre la température de point de Curie et qu'il reprend son aimantation lorsqu'on le refroidit.

En figures 2 et 3, on a représenté la couche de matériau ferromagnétique 1 et le support d'enregistrement 5 placé à proximité de la première face principale 10 de la couche 1.

A la température ambiante, la couche 1 est magnétisée uniformément et le champ magnétique (H1, H2) n'influence que de façon négligeable le support d'enregistrement magnétique 5. Celui-ci n'est soumis qu'au champ H nécessaire à aimantation de la couche 1 diminué du champ crée par les charges magnétiques distribuées aux extrémitées de la couche 1.

Si l'on chauffe une zone 3 de la couche 1, à l'aide par exemple d'un faisceau lumineux F1 produit par une source 2 comme cela est représenté en figure 1, et à condition d'atteindre la température de point de Curie, on désaimante cette zone 3. La zone 3 constitue au sein de la couche 1, une discontinuité magnétique faisant office d'entrefer. Les champs magnétiques H1, H2 ont tendance à déborder, comme représenté sur la figure 3, de chaque côté de la zone 3.

Le support d'enregistrement magnétique 5 placé à proximité de la zone 3 du côté de la face 10 permet un passage aisé du champ H1 en raison de sa perméabilité magnétique. Par contre, du côté de la face 11, le champ H2 rencontre un matériau tel que de l'air possèdant une plus faible perméabilité magnétique.

Dans ces conditions, lors de l'échauffement de la zone 3 de la couche 1, on va provoquer l'aimantation du support d'enregistrement magnétique 5 dans la zone 50 de ce support située en vis à vis de la zone 3.

Le champ developpé est essentiellement celui qui serait developpé par une zone 3 soumise à une magnétisation inverse pour la démagnétiser. Si la zone 3 est notablement plus profonde que large, ce champ est de l'ordre de grandeur de la magnétisation de la couche 1.

Lorsqu'on supprime l'échauffement de la zone 3, celle-ci reprend sous l'effet de l'aimantation des zones voisines de la couche 1, son aimantation d'origine.

On a ainsi enregistré, dans la zone 50 du support d'enregistrement 5, une information magnétique. Le support d'enregistrement 5 (ou bande magnétique) peut être déplacé selon la flèche D pour enregistrer dans une zone suivante une autre information magnétique.

Pour des raisons de résistance à l'usure, la couche 1 est préférentiellement fabriquée dans un oxyde tel qu'un ferrite de Mn Zn, un hexaferrite ou un grenat fortement magnétique tel qu'un grenat d'yttrium et de fer (YIG) dopé avec du bismuth ou du scandium.

Ces oxydes ont pour caractéristiques thermiques typiques :

- une capacité calorique d'environ C ≃ 5J/cm$^3$/$^\circ$C
- une diffusivité thermique de R = 0,5 mm$^2$/s.

Dans le cas de l'application du dispositif de l'invention pour l'enregistrement sur bandes magnétiques, l'expérience a montré que l'on peut obtenir aisément des temps d'enregistrement t, avec des longueurs l de diffusion thermique dans la couche 1 et des vitesses v de défilement de la bande dont les ordres de grandeurs sont les suivantes :

t = 1 μs l = 0,5 μm v = 50 cm/s
t = 10 μs l = 2 μm v = 20 cm/s
t = 100 μs l = 5 μm v = 5 cm/s

On notera qu'un tel dispositif d'enregistrement sur bande permet un enregistrement parallèle sur toute la largeur de la bande.

Une telle tête d'enregistrement de 4 mm permettant d'enregistrer toute la largeur de la bande d'une microcassette audio consomme alors une puissance :

P ≃ 10 mW/degré centésimaux, soit pour une température de point de Curie se situant aux environ de 100 à 120 degrés centésimaux, une élévation de température d'environ 100 degrés centésimaux et une puissance crête d'enregistrement de

P = 1 W

La puissance moyenne est en fait inférieure car le débit d'enregistrement continu pourrait être de l'ordre de 50 M bits/s, ce qui est supérieur aux applications typiques : vidéo - son numérique prévues dans le commerce.

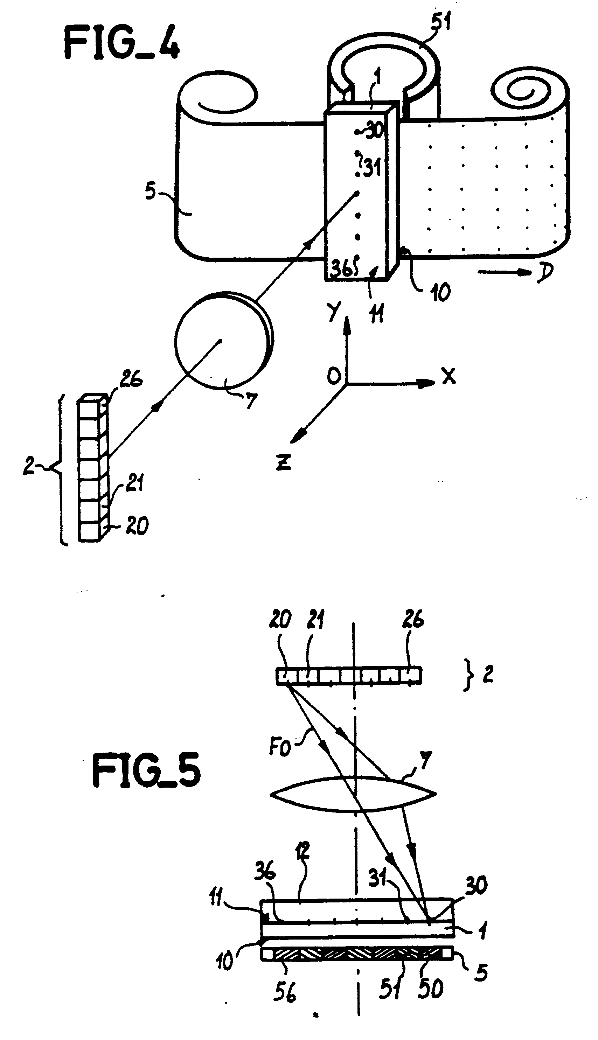

En se reportant aux figures 4 et 5, on va maintenant décrire un exemple de réalisation détaillé d'une tête de lecture selon l'invention.

Sur la figure 4, cette tête est orientée selon un trièdre de référence OXYZ. La figure 5 représente une vue de cette tête selon un plan parallèle ou au plan OYZ.

On trouve une couche 1 déposée sur un support 12 visible sur la figure 5. La face 11 de la couche 1 adhère au support 12. La face 10 de la couche 1 est placée à proximité d'un support d'enregistrement magnétique qui a été représenté sous forme d'une bande magnétique 5 sur la figure 4. La bande magnétique 5 se déplace selon la flèche D.

Un ensemble 2 de sources lumineuses 20, 21, ...26 éclaire la face 11 de la couche 1. Ces sources peuvent être issues de la tranche d'une diode émissive GaAs ou GaP par exemple.

Une lentille de focalisation 7 permet de focaliser chaque faisceau émis par les sources 20 à 26 vers des points 30 à 36 respectivement de la couche 1.

Ainsi comme on peut le voir sur la figure 5, un faisceau lumineux FO émis par la source 20 est focalisé par la lentille 7, traverse le support 12 et atteint un point 30 de la couche 1. Il échauffe alors une zone située autour du point 30 et permet d'élever la température du matériau de cette zone à la température du point de Curie du matériau. Le matériau est désaimanté dans cette zone. Le flux magnétique passe alors par la zone 50 de la bande magnétique 5 comme cela a été expliqué précédemment en relation avec la figure 3.

De la même façon un faisceau lumineux issu de la source lumineuse 21 atteint la zone 31 permettant la magnétisation de la zone 51 de la bande 5. Chaque source telle que la source 26 éclaire également une zone particulière (36) de la couche 1, permettant d'aimanter une zone 56 de la bande 5.

Comme on peut le voir sur la figure 4, les sources lumineuses 20 à 26 ont été disposées selon une ligne orthogonale à la direction de déplacement de la bande 5. Elles permettent ainsi l'enregistrement d'une lignes d'informations 50 à 56 disposée transversalement sur la bande. Le déplacement de la bande donne lieu ainsi à l'enregistrement d'une suite de lignes d'informations.

Il est à noter que ce dispositif permet l'enregistrement simultané de toute une ligne, chaque ligne nécessitant alors qu'un seul temps d'enregistrement.

Du côté opposé de la couche par rapport à la bande 5 a été prévu un aimant 50 qui génère un champ faible devant la coercivité de la bande, de manière à orienter la magnétisation de la couche 1 suivant la direction de couchage du pigment de la bande magnétique (en général, suivant l'axe de défilement). On peut aussi choisir de réaliser la couche 1 en un matériau suffisamment coercitif pour qu'il ne risque pas de se désaimanter. La zone chauffé de la couche est alors réorientée par son voisinage lors de son refroidissement.

Le support 12 de la couche 1 a été réalisé en matériau transparent aux faisceaux lumineux émis par les sources 20 à 26, tel que du verre.

Il est bien évident que les sources lumineuses peuvent être disposées d'une autre façon que selon une ligne. Elles peuvent par exemple être disposées selon une matrice bidimensionnelle pour être utilisées dans un autre type d'application que l'enregistrement sur bande magnétique.

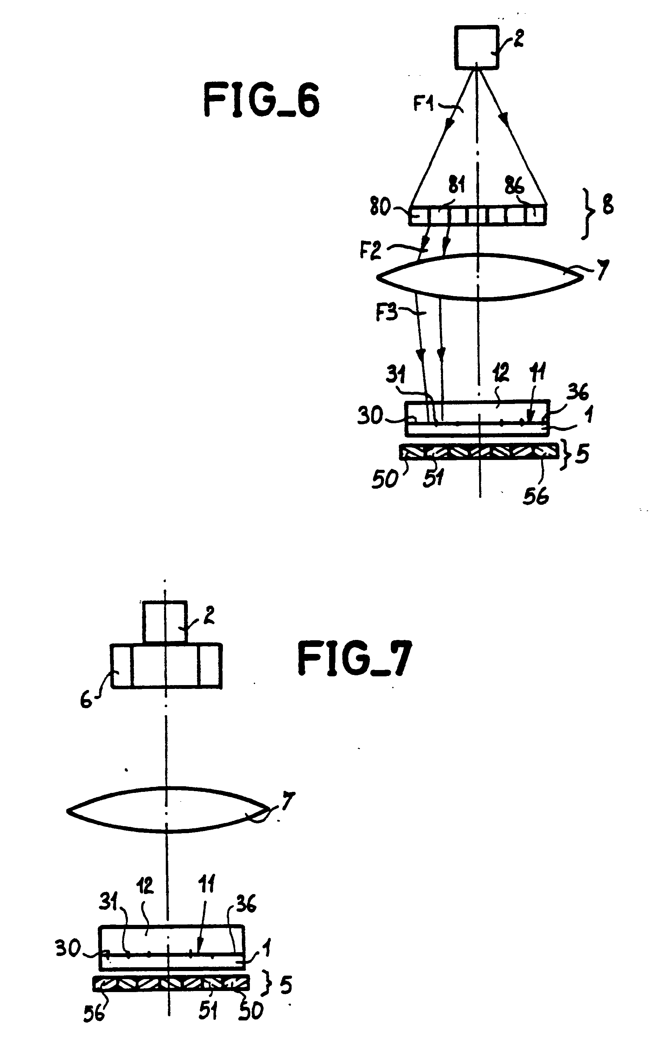

En se reportant à la figure 6 on va décrire un autre exemple de réalisation de l'invention dans lequel la source de chauffage est également une source lumineuse.

Pour simplifier la description, la tête de l'invention a été représentée selon un plan similaire à celui de la figure 5.

On retrouve sur la figure 6, la couche 1 déposée sur le support 12, le support d'enregistrement 5 disposé à proximité de la couche 1 et la lentille de focalisation 7.

Cependant, au lieu d'avoir un ensemble de sources lumineuses, le dispositif de la figure 6 prévoit une source unique 2 émettant un faisceau divergent F1 qui éclaire un modulateur de lumière 8.

Le modulateur 8 possède un ensemble de zones 80, 81,...86. Ces zones permettent de retransmettre sélectivement le faisceau F1. C'est ainsi que la zone 81 retransmet une portion du faisceau F1 sous la forme d'un faisceau F2 qui est focalisé par la lentille 7 sous la forme d'un faisceau F3 vers un point 31 de la couche 1.

Le modulateur 8, éclairé par la source 2, remplace ainsi l'ensemble de sources lumineuses 20 à 26 des figures 4 et 5.

Le fonctionnement du dispositif de la figure 6 est alors similaire à celui décrit précédemment, chaque zone 80 à 86 permettant l'éclairement et le chauffage d'une zone particulière 30 à 36 de la couche 1 pour l'enregistrement d'informations dans des zones 50 à 56 de la bande 5.

Le modulateur de lumière 8 peut être réalisé, par exemple, sous la forme d'écran à cristal liquide comportant des cellules 80 à 86 et permettant chacune de retransmettre ou non des portions du faisceau F1.

Les cellules 80 à 86 peuvent être alignées pour offrir un mode de réalisation similaire à celui des figures 4 et 5. Elles peuvent être disposées sous forme d'une matrice et être commandées de la même façon que les écrans à commande matricielle de type connu.

Selon un autre exemple de réalisation représenté sur la figure 7, on prévoit une source lumineuse unique 2, mais au lieu d'un modulateur de lumière, on prévoit un dispositif de déflexion 6 permet de dévier le faisceau lumineux fourni par la source 2, vers une zone particulière 30 à 36 de la couche 1. Une information peut être ainsi enregistrée à chaque fois dans une zone 50 à 56 du support d'enregistrement 5.

Ce type de réalisation permet également un enregistrement parallèle d'un ensemble d'informations.

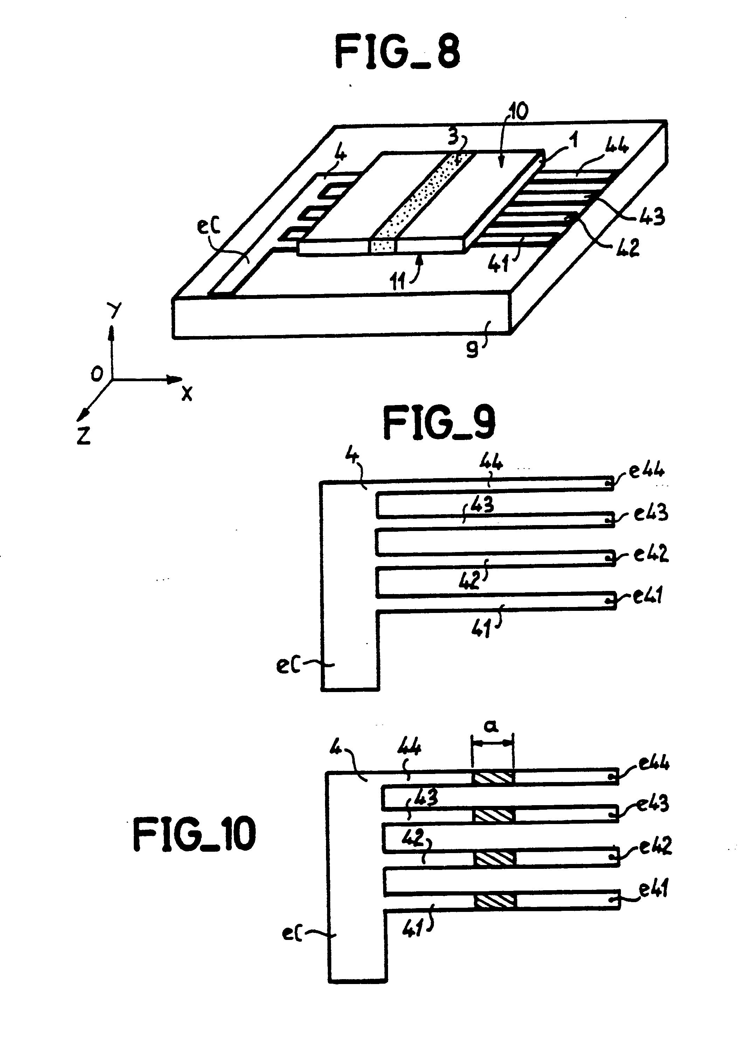

En se reportant aux figures 8 à 13 on va maintenant décrire un exemple de réalisation de l'invention dans lequel les sources de chauffage sont des électrodes de chauffage.

Sur la figure 8, on retrouve la couche 1 avec sa face 10 destinée a être disposée à proximité d'un support d'enregistrement magnétique non représenté sur la figure.

Sur un substrat 9 sont déposées des électrodes de chauffage 41, 42, 43, 44 en matériau résistif et constituant un ensemble d'électrodes 4. Sur ces électrodes et sur le substrat 9 est déposée une couche 1.

Les électrodes 41 à 44 sont alimentées en courant individuellement entre une entrée, e41 à e44 comme représenté sur la figure 9, et une entrée commune eC.

L'alimentation d'une électrode détermine le chauffage de la couche 1 située sous cette électrode.

Pour obtenir le chauffage et la desaimantation d'une zone limitée de la couche 1, on utilise une couche présentant une température de point de Curie relativement élevée, entre 300 et 500 degrés centésimaux par exemple, dans laquelle on réalise une bande 3 présentant une température de point de Curie beaucoup plus faible, autour de 100 degrés centésimaux par exemple. Cet abaissement de la température de point de Curie du matériau se fait par dopage. Ce dopage se fait par diffusion ou implantation ionique par exemple.

La bande 3 est réalisée perpendiculairement aux électrodes de chauffage 41 et 44 de telle façon que l'échauffement et la désaimantation dûs à une électrode se fassent au point de croisement de cette électrode et de la bande 3.

Selon un mode de réalisation des électrodes représenté en figure 10, une zone de largeur a des electrodes 41 à 44, correspondant à l'intersection de la couche 3 et des électrodes, est rendue plus résistive de telle façon que l'échauffement des électrodes se produise uniquement dans cet zone.

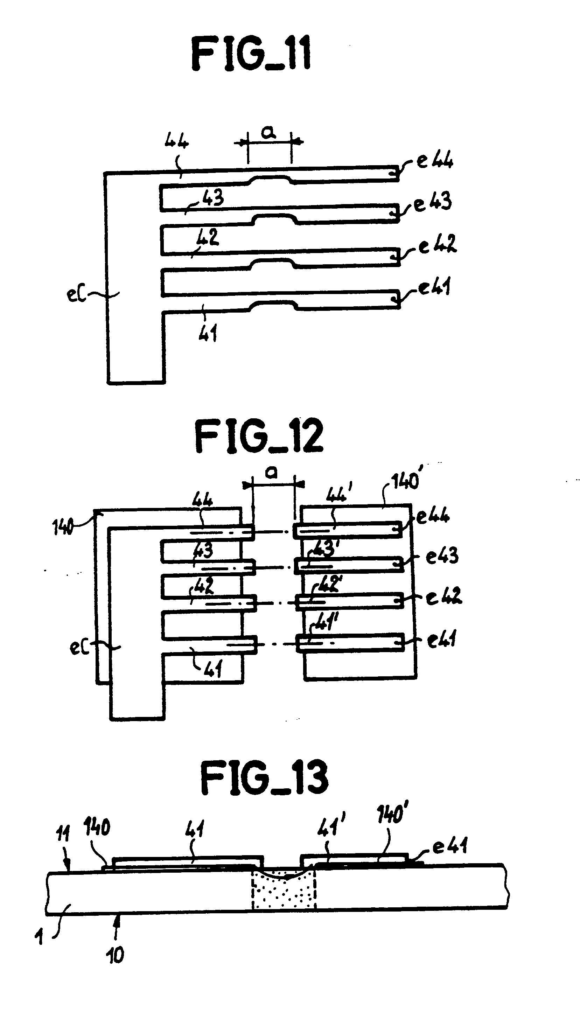

Comme représenté en figure 11, cette zone résistive est réalisée par un rétrécissement des électrodes 41 à 44 sur une longueur correspondant à la zone de largeur a.

La zone d'échauffement des électrodes peut être également déterminée par une interruption des électrodes d'environ 1 micromètre par exemple. Chaque électrode comporte alors une première portion (41 à 44) et une deuxième portion (41' à 44') située dans le prolongement de la première. Les électrodes 41 à 44 et 41' à 44' sont déposées sur une couche isolante 140, 140' respectivement de manière à limiter la zone de passage du courant.

Lors de l'alimentation d'une électrode, 41-41' par exemple, le courant électrique tend à passer par la bande 3 de la couche 1 et à échauffer cette bande. On trouve un exemple d'un tel fonctionnement en figure 13.

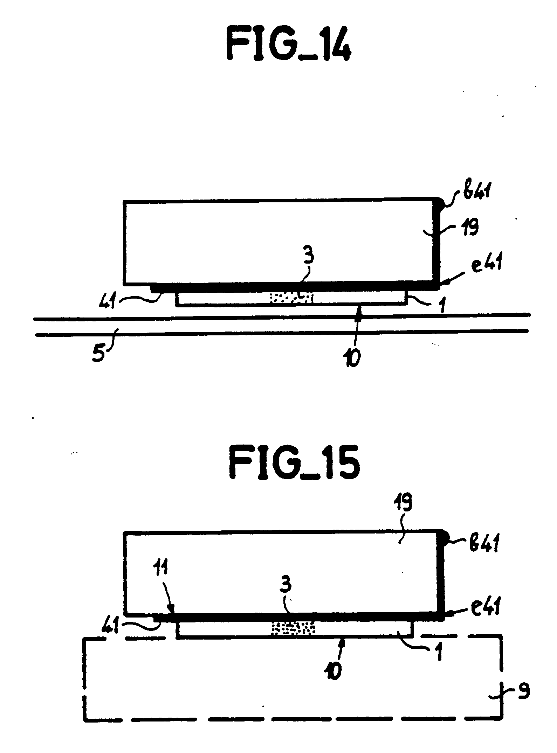

Selon une variante de réalisation de l'invention représentée en figure 14, la tête d'enregistrement est réalisé sur un élément monolithique de circuits intégrés 19 appelé couramment "puce" dans la technique des circuits intégrés.

Un tel élément 19 contient les circuits de commande de la tête d'enregistrement. Il possède des bornes de connexion telle que b 41.

Sur une face plane du silicium de l'élément 19 sont déposées les électrodes de chauffage telle que 41. Ces électrodes sont connectées à une ou plusieurs bornes de sortie qui permettent de les commander. L'électrode 41 a, par exemple, son entrée e41 connectée à la borne B41.

Sur les électrodes de chauffage est déposée la couche 1 possèdant une bande 3 à faible température de point de Curie.

On obtient ainsi une tête d'enregistrement magnétique réalisée sur un élément monolithique de circuits intégrés. Cette tête est disposée, comme représenté en figure 14, au voisinage d'un support d'enregistrement magnétique avec la face libre 10 de la couche 1 située à proximité du support d'enregistrement de façon à fonctionner comme celà a été décrit précédemment.

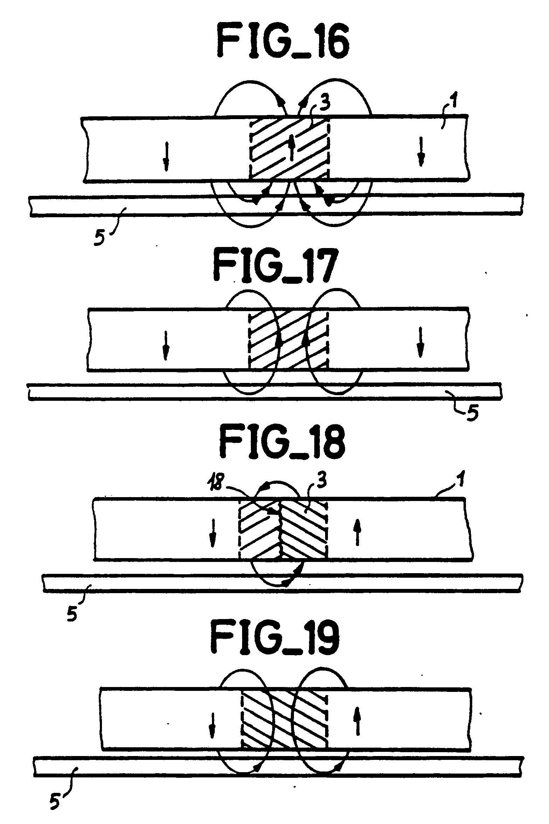

Pour la réalisation d'une telle tête d'enregistrement, l'invention prévoit un procédé représenté en figure 15, selon lequel, on dépose tout d'abord sur un substrat 9 une couche 1 d'un matériau magnétique par tout procédé connu dans la technique. On réalise ensuite dans la couche 1, une bande 3 à faible température de point de Curie par un procédé de dopage mentionné précédemment.

Par ailleurs on dépose sur une face plane de l'élément monolithique de circuits intégrés 19 l'ensemble des électrodes de chauffage 4 (électrode 41 sur la figure 15). Cette opération se fait par dépôt d'une couche d'un matériau conducteur résistif et par gravure des électrodes dans la couche ainsi déposée. Lors de la réalisation de ces électrodes, les connexions des entrées (e41) des électrodes aux bornes de connexion (b41) de l'élément 19 sont également implémentées.

L'élément monolithique de circuit intégré 19 est ensuite collé à la face 11 de la couche 10 avec les électrodes en contact avec la face 11 et perpendiculaires à la bande 3.

Enfin, le substrat 9 est éliminé par tout procédé adapté à la nature du substrat (usinage chimique, usinage mécanique) de manière à laisser libre la face 10 de la couche 1 et de la bande 3.

Dans les exemples de réalisation qui précèdent, on a considéré le cas d'une couche de matériau magnétique 1 dont la magnétisation est orientée dans le plan de la couche.

L'invention est également applicable au cas d'une couche 1 dont la magnétisation est orientée perpendiculairement au plan de la couche.

Selon la figure 16, la couche 1, disposée à proximité du support d'enregistrement 5, possède une zone 3 dont l'orientation de l'aimantation est inversée par rapport au reste de la couche 1 situé de part et d'autre de la zone 3. Cette zone 3 peut être une bande de configuration similaire à celle de la figure 8. L'inversion du sens d'aimantation dans cette zone a été obtenue définitivement par échauffement au dessus du point de Curie.

La tête d'enregistrement est ensuite prête à fonctionner.

A l'état de repos, lorsque les dispositions décrites précédemment (sources lumineuses, électrodes de chauffage) ne chauffent pas la zone 3, un flux magnétique circule comme représenté en figure 16. Un champ relativement élevé est induit dans le support d'enregistrement magnétique 5 et une zone du support d'enregistrement est magnétisée.

Lorsqu'on chauffe la zone 3, elle est démagnétisée. Le champ au voisinage de la zone 3 décroit (figure 17). Le support d'enregistrement 5 est soumis à un champ magnétique nettement inférieur et n'est donc pas magnétisé.

La couche de matériau magnétique 1 magnétisée perpendiculairement au plan de la couche comme représenté en figures 16 et 17 peut être utilisée dans les dispositifs décrits en relation avec les figures 1 à 15. Par contre, à la différence des dispositifs décrits précédemment, un échauffement jusqu'à la température de point de Curie a pour effet de réduire le champ au voisinage de la couche 1 vers le support d'enregistrement 5 au lieu de l'augmenter comme dans les cas précédents où la couche 1 est magnétisée selon le plan de la couche.

Selon la figure 18, à l'emplacement de la zone 3, une discontinuité 18 perpendiculaire au plan de la couche est réalisée selon l'axe de la zone (ou de la bande) 3. Cette discontinuité est créée par implantation ionique par exemple et l'aimantation est inversée de part et d'autre de cette discontinuité.

A l'état de repos, lorsque les dispositions de chauffage décrites précédemment (sources lumineuses, électrodes de chauffage) ne chauffent pas la zone 3, un flux magnétique circule comme représenté en figure 18. Un champ relativement élevé est induit dans le support d'enregistrement magnétique 5 et une zone du support d'enregistrement est magnétisée.

Lorsqu'on chauffe la zone 3, elle est démagnétisée. Le champ au voisinage de la zone 3 décroit (figure 19). Le support d'enregistrement 5 est soumis à un champ magnétique nettement inférieur et n'est donc pas magnétisé.

La couche de matériau magnétique 1 magnétisée perpendiculairement au plan de la couche comme représenté en figures 18 et 19 peut être utilisée dans les dispositifs décrits en relation avec les figures 1 à 15. Comme dans la couche de matériau magnétique des figures 16 et 17, un échauffement jusqu'à la température de point de Curie a pour effet de réduire le champ au voisinage de la couche 1 vers le support d'enregistrement 5 au lieu de l'augmenter comme dans les cas décrits en se reportant aux figures 1 à 15 où la couche 1 est magnétisée selon le plan de la couche.

**Revendications**

1. Tête d'enregistrement thermo-magnétique comprenant un support magnétique (5) d'enregistrement d'informations caractérisée en ce qu'elle comporte : une couche (1) en matériau ferromagnétique à température de point de Curie déterminée, magnétisée de manière homogène, dont l'épaisseur est délimitée par une première face principale (10) et une deuxième face principale (11), ladite couche (1) étant disposée avec sa première face principale (10) placée à proximité du support magnétique (5) d'enregistrement et parallèlement à ce support magnétique ; ainsi qu'au moins une source lumineuse (2), disposée du côté de la deuxième face principale (11) de ladite couche (1), émettant un faisceau lumineux vers cette deuxième face (11), et permettant d'élever la température d'une zone (3) dans toute l'épaisseur de la couche à partir de ladite deuxième face principale (11) jusqu'à la première face principale (10) jusqu'à atteindre la température du point de Curie du matériau ferromagnétique constituant la couche (1), de façon à réaliser dans la couche (1) en matériau ferromagnétique au moins une zone (3) constituant, au sein de cette couche (1), une discontinuité magnétique faisant office d'entrefer.

2. Tête d'enregistrement thermo-magnétique selon la revendication 1, caractérisée en ce qu'elle comporte un nombre déterminé de sources lumineuses (21 à 26) déterminant dans la couche (1), un même nombre de zones (30 à 36) distinctes pouvant être chauffées sélectivement.

3. Tête d'enregistrement thermo-magnétique selon la revendication 2, caractérisée en ce que les sources lumineuses (21 à 26) sont alignées parallèlement à la deuxième face (11) de la couche de façon à ce que les zones (30 à 36) soient alignées et permettent l'enregistrement de lignes d'informations sur le support magnétique (5) d'enregistrement.

4. Tête d'enregistrement thermo-magnétique selon la revendication 1, caractérisée en ce qu'elle comporte une lentille de focalisation (7) située entre chaque source lumineuse (2) et la deuxième face (11) de la couche (1) et permettant de focaliser le faisceau lumineux (F1) émis par chaque source en une zone (30 à 36) déterminée de la couche (1).

5. Tête d'enregistrement thermo-magnétique selon la revendication 4, caractérisée en ce que la lentille de focalisation (7) est commune à tous les faisceaux lumineux émis par des différentes sources lumineuses (2).

6. Tête d'enregistrement thermo-magnétique selon la revendication 1, caractérisée en ce qu'elle comporte un modulateur de lumière (8) situé entre la source lumineuse (2) et la deuxième face (11) de la couche 1 et permettant de chauffer sélectivement différentes zones (30 à 36) de la couche (1).

7. Tête d'enregistrement thermo-magnétique selon la revendication 6, caractérisée en ce que le modulateur de lumière (8) est une cellule à cristal liquide disposée parallèlement à la première face (11) de la couche 1 et permettant le passage de la lumière vers des zones (30 à 36) choisies de la couche (1).

8. Tête d'enregistrement thermo-magnétique selon l'une des revendications 6 ou 7 caractérisée en ce qu'elle comporte au moins une lentille de focalisation située entre le modulateur de lumière (8) et la deuxième face (11) de la couche (1).

9. Tête d'enregistrement thermo-magnétique selon la revendication 1, caractérisée en ce qu'elle comporte un dispositif de déflexion (6) du faisceau lumineux (F1) et permettant de le diriger vers une zone choisie (30 à 36) de la couche (1).

10. Tête d'enregistrement thermo-magnétique selon la revendication 9, caractérisée en ce qu'elle comporte au moins une lentille de focalisation située sur le trajet du faisceau lumineux (F1).

11. Tête d'enregistrement thermo-magnétique selon la revendication 1, caractérisée en ce qu'elle comporte une plaquette de substrat (12) en matériau transparent sur laquelle est déposée la couche (1) de matériau ferromagnétique, la deuxième face (11) de la couche (1) étant en contact avec le substrat (12) et le faisceau lumineux (F1) traversant le substrat (12) pour atteindre la couche (1).

12. Tête d'enregistrement thermo-magnétique comprenant un support magnétique (5) d'enregistrement d'informations, caractérisée en ce qu'elle comporte : une couche (1) en matériau ferromagnétique à température de point de Curie déterminée, magnétisée de manière homogène, dont l'épaisseur est délimitée par une première face principale (10), et une deuxième face principale (11), ladite couche (1) étant disposée avec sa première face principale (10) placée à proximité du support magnétique (5) d'enregistrement et parallèlement à ce support magnétique ; ainsi qu'au moins une résistance électrique (41 à 44) disposée du côté de la deuxième face principale (11) de ladite couche (1), et permettant d'élever la température d'une zone (3) dans toute l'épaisseur de la couche à partir de ladite deuxième face principale (11) jusqu'à la première face principale (10) jusqu'à atteindre la température du point de Curie du matériau ferromagnétique constituant la couche (1), de façon à réaliser dans la couche (1) en matériau ferromagnétique au moins une zone (3) constituant, au sein de cette couche (1), une discontinuité magnétique faisant office d'entrefer.

13. Tête d'enregistrement thermo-magnétique selon la revendication 12, caractérisée en ce que chaque résistance électrique (41 à 44) est une électrode en matériau métallique résistif déposée sur la deuxième face (11) de la couche (1).

14. Tête d'enregistrement thermo-magnétique selon la revendication 13, caractérisée en ce qu'elle comporte un nombre déterminé d'électrodes de chauffage (41 à 44) déterminant dans la couche (1) un même nombre de zones distinctes (30 à 36) pouvant être chauffées sélectivement.

15. Tête d'enregistrement thermo-magnétique selon la revendication 13, caractérisée en ce qu'elle comporte un nombre déterminé d'électrodes de chauffage (51 à 44) alignées et disposées parallèlement.

16. Tête d'enregistrement thermo-magnétique selon la revendication 13, caractérisée en ce qu'une première extrémité de chaque électrode (41 à 44) est connectée à une entrée de connexion commune (eC) et qu'une deuxième extrémité de chaque électrode (41 à 44) possède une entrée de connexion individuelle (e41 à e44).

17. Tête d'enregistrement thermo-magnétique selon la revendication 13, caractérisée en ce que chaque électrode (41) présente un segment de longueur déterminée (a) qui a été rendu plus résistif que l'ensemble de l'électrode (41).

18. Tête d'enregistrement thermo-magnétique selon la revendication 17, caractérisée en ce que chaque électrode possède une découpe sur ladite longueur déterminée (a) la rendant plus résistive sur cette longueur.

19. Tête d'enregistrement thermo-magnétique selon la revendication 13, caractérisée en ce que chaque électrode (41) possède une interruption sur une longueur déterminée (a) de telle façon que lors d'une alimentation en courant électrique d'une électrode le courant électrique passe dans la couche (1) et produise un échauffement.

20. Tête d'enregistrement thermo-magnétique selon l'une quelconque des revendications 12 à 18, caractérisée en c qu'elle comporte un élément monolithique de circuit intégré (19) contenant des circuits de commande de la tête d'enregistrement et possédant à sa surface des bornes de connexions (b41) à ces circuits de commande ; un nombre déterminé d'électrodes de chauffage (41 à 44) étant déposé sur une face plane de l'élément monolithique de circuit intégré (19) avec chaque électrode (41) connectée à au moins une borne de connexion (b41) ; et une couche de matériau ferromagnétique (1) déposée sur les électrodes (41 à 44).

21. Tête d'enregistrement thermo-magnétique selon l'une quelconque des revendications précédentes, caractérisée en ce que la couche (1) en matériau ferromagnétique comporte au moins une première zone et une deuxième zone contiguës en matériaux ferromagnétiques possédant chacune respectivement une température de point de Curie élevée et une température de point de Curie basse, les moyens de chauffage (source lumineuse 2 ou électrode de chauffage 41 à 44) amenant la couche à plus bas point de Curie à s'échauffer à une température supérieure à cette température de Curie basse formant ainsi momentanément un entrefer alors que le matériau à point de Curie élevé n'est pas suffisamment échauffé et reste magnétique, l'aimantation possédée par ce matériau magnétique procurant ainsi un champ de fuite au niveau de l'entrefer ainsi créé dont on peut se servir pour écrire sur un support magnétique défilant.

22. Tête d'enregistrement thermo-magnétique selon l'une quelconque des revendications 12 à 20, caractérisée en ce que chaque électrode est linéaire et la couche (1) possède, sous chaque électrode, une bande (3) de matériau ferromagnétique perpendiculaire aux électrodes et dont la température de point de Curie a été abaissée de façon à ce que le chauffage d'une électrode ne détermine la démagnétisation que dans ladite bande (3) de la couche (1) au point de croisement de cette bande et de l'électrode chauffée.

23. Tête d'enregistrement thermo-magnétique selon l'une des revendications 1 ou 12, caractérisée en ce que le matériau ferromagnétique de la couche (1) a une température de point de Curie inférieure à 150 degrés centisimaux.

24. Tête d'enregistrement thermo-magnétique selon l'une des revendications 1 ou 12, caractérisée en ce que la magnétisation de la couche de matériau ferromagnétique (1), en l'absence de chauffage est orientée dans le plan de la couche (1).

25. Tête d'enregistrement thermo-magnétique selon l'une des revendications 1 ou 12, caractérisée en ce que la magnétisation de la couche de matériau ferromagnétique (1), en l'absence de chauffage est orientée perpendiculairement au plan de la couche (1).

26. Tête d'enregistrement thermo-magnétique selon la revendication 24, caractérisée en ce que dans la couche (1) pour chaque zone (3) susceptible d'être chauffée, la magnétisation est orientée en l'absence de chauffage, en sens inverse du reste de la couche.

27. Tête d'enregistrement thermo-magnétique selon la revendication 24, caractérisée en ce que, dans la couche (1), chaque zone (3) susceptible d'être chauffée possède une frontière délimitant, en l'absence de chauffage, deux sens d'orientation inverses de la magnétisation de la couche.

28. Tête d'enregistrement thermo-magnétique selon l'une des revendications 1 ou 12, caractérisée en ce qu'elle comporte un aimant (50) situé du côté de la première face (10) de la couche (1), avec le support magnétique d'enregistrement (5) placé entre la première face (10) et l'aimant (50), cet aimant (50) générant un champ très faible devant la coercivité du support d'enregistrement et permettant d'orienter la magnétisation de la couche (1).

29. Procédé de fabrication d'une tête d'enregistrement thermo-magnétique selon la revendication 12, caractérisé en qu'il comporte les phases suivantes :
- a) une phase de dépôt d'une couche d'un matériau ferromagnétique (1) sur un substrat (9) ;
- b) une phase de dépôt d'électrodes chauffantes (41 à 44) sur une face d'un élément monolithique de circuits intégrés (19) ;
- c) une phase d'assemblage de l'ensemble couche de matériau ferromagnétique (1) - substrat (9) et de l'ensemble électrodes chauffantes (41 à 44) - élément (19) avec la couche de matériau ferromagnétique en contact avec les électrodes chauffantes (41-44) ;
- d) une phase d'élimination du substrat (9).

30. Procédé de fabrication d'une tête d'enregistrement thermo-magnétique selon la revendication 29, caractérisé en ce qu'il comporte, après la phase de dépôt de la couche de matériau ferromagnétique (1), une phase d'abaissement de la température de point de Curie d'une bande (3), perpendiculaire aux électrodes chauffantes (41 à 44), de la couche de matèriau ferromagnétique (1).

## Claims

1. A thermomagnetic recording head comprising a magnetic support (5) for recording informations, characterized in that it comprises: a layer (1) of ferromagnetic material having a predetermined Curie point temperature, this layer being uniformly magnetized and having a thickness which is delimited by a first main surface (10) and a second main surface (11), said first main surface (10) of said layer (1) being located close to the magnetic recording support (5) and parallelly to this magnetic support; as well as at least one light source (2) disposed at the side of the second main surface (11) of said layer (1) and projecting a light beam towards said second surface (11), thus allowing the temperature of a zone (3) through the entire thickness of the layer beginning with the second main surface (11) up to the first main surface (10) to be raised until the Curie point temperature of the ferromagnetic material constituting said layer (1) is reached, in order to obtain in the layer (1) of ferromagnetic material at least one zone (3) which constitutes inside said layer (1) a magnetic discontinuity behaving like a magnetic gap.

2. A thermomagnetic recording head according to claim 1, characterized in that it comprises a given number of light sources (21 to 26) defining in the layer (1) a same number of distinct zones (30 to 36) which may be selectively heated up.

3. A thermomagnetic recording head according to

· · ·

claim 2, characterized in that the light sources (21 to 26) are aligned parallelly to the second surface (11) of the layer such that the zones (30 to 36) are aligned and allow rows of informations to be recorded on the magnetic recording support (5).

4. A thermomagnetic recording head according to claim 1, characterized in that it comprises a focussing lens (7) situated between each light source (2) and the second surface (11) of the layer (1) and allowing the light beam (F1) emitted by each source to be focussed in a predetermined zone (30 to 36) of the layer (1).

5. A thermomagnetic recording head according to claim 4, characterized in that the focussing lens (7) is a common lens for all the light beams emitted by the different light sources (2).

6. A thermomagnetic recording head according to claim 1, characterized in that it comprises a light modulator (8) situated between the light source (2) and the second surface (11) of the layer (1) and allowing different zones (30 to 36) of the layer (1) to be selectively heated up.

7. A thermomagnetic recording head according to claim 6, characterized in that the light modulator (8) is a liquid crystal cell disposed parallelly to the first surface (11) of the layer (1) and allowing the light to be directed to selected zones (30 to 36) of the layer (1).

8. A thermomagnetic recording head according to one of claims 6 and 7, characterized in that it comprises at least a focussing lens situated between the light modulator (8) and the second surface (11) of the layer (1).

9. A thermomagnetic recording head according to claim 1, characterized in that it comprises a deflection device (6) for deflecting the light beam (F1) and allowing to direct it to a selected zone (30 to 36) of the layer (1).

10. A thermomagnetic recording head according to claim 9, characterized in that it comprises at least one focussing lens situated in the path of the light beam (F1).

11. A thermomagnetic recording head according to claim 1, characterized in that it comprises a substrate dice (12) made of a transparent material on which the layer (1) of ferromagnetic material is deposited, the second surface (11) of the layer (1) being in contact with the substrate (12) and the light beam (F1) passing through the substrate (12) before reaching the layer (1).

12. A thermomagnetic recording head comprising a magnetic support (5) for recording informations, characterized in that it comprises: a layer (1) of ferromagnetic material having a predetermined Curie point temperature, this layer being uniformly magnetized and having a thickness which is delimited by a first main surface (10) and a second main surface (11), said first main surface (10) of said layer (1) being located close to the magnetic recording support (5) and parallelly to this magnetic support; as well as at least one electric resistor (41 to 44) disposed at the side of the second main surface (11) of said layer (1) and projecting a light beam towards said second surface (11), thus allowing the temperature of a zone (3) through the entire thickness of the layer beginning with the second main surface (11) up to the first main surface (10) to be raised until the Curie point temperature of the ferromagnetic material constituting said layer (1) is reached, in order to obtain in the layer (1) of ferromagnetic material at least one zone (3) which constitutes inside said layer (1) a magnetic discontinuity behaving like a magnetic gap.

13. A thermomagnetic recording head according to claim 12, characterized in that each electric resistor (41 to 44) is an electrode made of metallic resistor material and deposited on the second surface (11) of the layer (1).

14. A thermomagnetic recording head according to claim 13, characterized in that it comprises a predetermined number of heating electrodes (41 to 44) which define in the layer (1) a same number of distinct zones (30 to 36) which may be selectively heated up.

15. A thermomagnetic recording head according to claim 13, characterized in that it comprises a predetermined number of heating electrodes (41 to 44) which are aligned and disposed in parallel.

16. A thermomagnetic recording head according to claim 13, characterized in that a first end of each electrode (41 to 44) is connected to a common input terminal (eC) and that a second end of each electrode (41 to 44) disposes of an individual input terminal (e41 to e44).

17. A thermomagnetic recording head according to claim 13, characterized in that each electrode (41) presents a portion of predetermined length (a) whose resistor effect exceeds that of the rest of the electrode (41).

18. A thermomagnetic recording head according to claim 13, characterized in that each electrode is provided with a cutout portion along said predetermined length (a) by which the electrode becomes more resistive along this length.

19. A thermomagnetic recording head according to claim 13, characterized in that each electrode (41) is interrupted along a predetermined length (a) in such a way that an electric current supplied to an electrode passes into the layer (1) and creates a heating effect.

20. A thermomagnetic recording head according to any one of claims 12 to 18, characterized in that it comprises a monolithic integrated circuit element (19) containing control circuits for controlling the recording head and presenting at its surface control circuit connection terminals (b41), a predetermined number of heating electrodes (41 to 44) being applied to a plane surface of the monolithic integrated circuit element (19), each electrode (41) being connected to at least one connection terminal (b41), and that it comprises a layer of ferromagnetic material (1) deposited on the electrodes (41 to 44).

21. A thermomagnetic recording head according to any on eof the precedsing claims, characterized in that the layer (1) of ferromagnetic material comprises at least a first zone and a second adjacent zone made of ferromagnetic materials, one of them presenting a high Curie point temperature and the other a low Curie point temperature, the heating means (light source 2 or heating electrode 41 to 44) heating the layer having a lower Curie point temperature up to a temperature above said lower Curie point temperature, thus forming temporarily a magnetic gap, while the material having a high Curie point is not enough heated up and remains magnetic, the magnetization inherent to said magnetic material thus providing a stray field around this magnetic gap which allows to be used for writing on a defiling magnetic support.

22. A thermomagnetic recording head according to any one of claims 12 to 20, characterized in that each electrode is a linear electrode, and the layer (1) disposes of a strip (3) of ferromagnetic material under each electrode perpendicularly to the electrodes, the Curie point temperature of the strip being lowered in such a way that the heating by an electrode determines the demagnetization only in said strip (3) of the layer (1) at the intersection point of this strip and the heated electrode.

23. A thermomagnetic recording head according to one of claims 1 to 12, characterized in that the ferromagnetic material of the layer (1) has a Curie point temperature below 150° C.

24. A thermomagnetic recording head according to one of claims 1 or 12, characterized in that the magnetization of the layer (1) of ferromagnetic material is directed along the plane of the layer (1) if no heating takes place.

25. A thermomagnetic recording head according to one of claims 1 or 12, characterized in that the magnetization of the layer (1) of ferromagnetic material is directed perpendicularly to the plane of the layer (1) if no heating takes place.

26. A thermomagnetic recording head according to claim 24, characterized in that in the layer (1) the magnetization for each zone (3) susceptible to be heated is directed in the opposite direction to the rest of the layer, if no heating takes place.

27. A thermomagnetic recording head according to claim 24, characterized in that in the layer (1) each zone (3) which is susceptible to be heated disposes of a borderline which delimits two opposite directions of the layer magnetization, if no heating takes place.

28. A thermomagnetic recording head according to one of claims 1 or 12, characterized in that it comprises a magnet (50) located on the side of the first surface (10) of the layer (1), the magnetic recording support (5) being placed between the first surface (10) and the magnet (50), the latter creating a very weak field compared to the coercive force of the recording support and allowing to direct the demagnetization of the layer (1).

29. A method for manufacturing a thermomagnetic recording head according to claim 12, characterized in that it comprises the following steps:
    - a) a step of depositing a layer of thermomagnetic material (1) on a substrate (9);
    - b) a step of depositing heating electrodes (41 to 44) on one surface of a monolithic integrated circuit element (19);

- c) a step of assembling the unit composed of the layer (1) of ferromagnetic material and of the substrate (9) with the unit composed of the heating electrodes (41 to 44) and the integrated circuit element (19), the layer of thermomagnetic material being in contact with the heating electrode (41 to 44);
- d) a step of eliminating the substrate (9).

30. A method of manufacturing a thermomagnetic recording head according to claim 29, characterized in that it comprises, following the step of depositing the layer (1) of ferromagnetic material, a step in which is lowered the Curie point temperature of a strip (3) perpendicular to the heating electrodes (41 to 44) of the layer (1) of ferromagnetic material.

**Patentansprüche**

1. Thermomagnetischer Aufzeichnungskopf mit einem magnetischen Informationsaufzeichnungsträger (5), dadurch gekennzeichnet, daß er aufweist: eine Schicht (1) aus ferromagnetischem Material mit einer bestimmten Curiepunkttemperatur, wobei diese Schicht homogen magnetisiert ist und von einer ersten Hauptfläche (10) und einer zweiten Hauptfläche (11) begrenzt ist, wobei diese Schicht (1) weiter mit ihrer ersten Hauptfläche (10) in der Nähe des magnetischen Aufzeichnungsträgers (5) und parallel zu diesem angeordnet ist, und mindestens eine Lichtquelle (2), die auf der Seite der zweiten Hauptoberfläche (11) der Schicht (1) liegt und einen Lichtstrahl auf diese zweite Oberfläche (11) wirft, der es erlaubt, die Temperatur einer Zone (3) in der gesamten Dicke der Schicht ausgehend von der zweiten Hauptoberfläche (11) und bis zur ersten Hauptoberfläche (10) auf die Curiepunkttemperatur des die Schicht (1) bildenden ferromagnetischen Materials zu erhöhen, so daß in der Schicht (1) aus ferromagnetischem Material mindestens eine Zone (3) gebildet wird, die innerhalb der Schicht (1) eine magnetische Diskontinuität bildet und einen Magnetspalt darstellt.

2. Thermomagnetischer Aufzeichnungskopf nach Anspruch 1, dadurch gekennzeichnet, daß er eine bestimmte Anzahl von Lichtquellen (21 bis 26) enthält, die in der Schicht (1) eine gleich große Zahl von getrennten Zonen (30 bis 36) definieren, die selektiv erwärmt werden können.

3. Thermomagnetischer Aufzeichnungskopf nach Anspruch 2, dadurch gekennzeichnet, daß die Lichtquellen (21 bis 26) parallel zur zweiten Oberfläche (11) der Schicht in Flucht angeordnet sind, derart, daß die Zonen (30 bis 36) ebenfalls fluchtend liegen und die Aufzeichnung von Informationszeilen auf dem magnetischen Aufzeichnungsträger (5) erlauben.

4. Thermomagnetischer Aufzeichnungskopf nach Anspruch 1, dadurch gekennzeichnet, daß er eine Fokussierlinse (7) aufweist, die zwischen jeder Lichtquelle (2) und der zweiten Oberfläche (11) der Schicht (1) liegt und die Fokussierung des von jeder Lichtquelle ausgehenden Lichtstrahls (F1) in einer bestimmten Zone (30 bis 36) der Schicht (1) erlaubt.

5. Thermomagnetischer Aufzeichnungskopf nach Anspruch 4, dadurch gekennzeichnet, daß die Fokussierlinse (7) allen von den verschiedenen Lichtquellen (2) ausgehenden Lichtstrahlen gemein ist.

6. Thermomagnetischer Aufzeichnungskopf nach Anspruch 1, dadurch gekennzeichnet, daß er einen Lichtmodulator (8) zwischen der Lichtquelle (2) und der zweiten Oberfläche (11) der Schicht (1) aufweist, der es ermöglicht, verschiedene Zonen (30 bis 36) der Schicht (1) selektiv zu erwärmen.

7. Thermomagnetischer Aufzeichnungskopf nach Anspruch 6, dadurch gekennzeichnet, daß der Lichtmodulator (8) eine Flüssigkristallzelle ist, die parallel zur ersten Oberfläche (11) der Schicht (1) angeordnet ist und den Durchgang des Lichts zu ausgewählten Zonen (30 bis 36) der Schicht (1) ermöglicht.

8. Thermomagnetischer Aufzeichnungskopf nach einem der Ansprüche 6 oder 7, dadurch gekennzeichnet, daß er mindestens eine Fokussierlinse zwischen dem Lichtmodulator (8) und der zweiten Oberfläche (11) der Schicht (1) aufweist.

9. Thermomagnetischer Aufzeichnungskopf nach Anspruch 1, dadurch gekennzeichnet, daß er eine Ablenkvorrichtung (6) zur Ablenkung des Lichtstrahls (F1) besitzt, die es ermöglicht, den Lichtstrahl auf eine ausgewählte Zone (30 bis 36) der Schicht (1) zu lenken.

10. Thermomagnetischer Aufzeichnungskopf nach Anspruch 9, dadurch gekennzeichnet, daß er mindestens eine Fokussierlinse im Verlauf des Lichtstrahls (F1) aufweist.

**11.** Thermomagnetischer Aufzeichnungskopf nach Anspruch 1, dadurch gekennzeichnet, daß er eine Substratplatte (12) aus einem transparenten Material aufweist, auf die die Schicht (1) aus ferromagnetischem Material aufgebracht ist, wobei die zweite Oberfläche (11) der Schicht (1) mit dem Substrat (2) in Berührung steht und der Lichtstrahl (F1) das Substrat (2) durchquert, um die Schicht (1) zu erreichen.

**12.** Thermomagnetischer Aufzeichnungskopf mit einem magnetischen Informationsaufzeichnungsträger (5), dadurch gekennzeichnet, daß er aufweist: eine Schicht (1) aus ferromagnetischem Material mit einer bestimmten Curiepunkttemperatur, wobei diese Schicht homogen magnetisiert ist und von einer ersten Hauptfläche (10) und einer zweiten Hauptfläche (11) begrenzt ist, wobei diese Schicht (1) weiter mit ihrer ersten Hauptfläche (10) in der Nähe des magnetischen Aufzeichnungsträgers (5) und parallel zu diesem angeordnet ist, und mindestens einen elektrischen Widerstand (41 bis 44), der auf der Seite der zweiten Hauptoberfläche (11) der Schicht (1) liegt und einen Lichtstrahl auf diese zweite Oberfläche (11) wirft, der es erlaubt, die Temperatur einer Zone (3) in der gesamten Dicke der Schicht ausgehend von der zweiten Hauptoberfläche (11) und bis zur ersten Hauptoberfläche (10) auf die Curiepunkttemperatur des die Schicht (1) bildenden ferromagnetischen Materials zu erhöhen, so daß in der Schicht (1) aus ferromagnetischem Material mindestens eine Zone (3) gebildet wird, die innerhalb der Schicht (1) eine magnetische Diskontinuität bildet und einen Magnetspalt darstellt.

**13.** Thermomagnetischer Aufzeichnungskopf nach Anspruch 12, dadurch gekennzeichnet, daß jeder elektrische Widerstand (41 bis 44) eine Elektrode aus einem metallischen Widerstandsmaterial ist, die auf die zweite Oberfläche (11) der Schicht (1) aufgebracht ist.

**14.** Thermomagnetischer Aufzeichnungskopf nach Anspruch 13, dadurch gekennzeichnet, daß er eine bestimmte Anzahl von Heizelektroden (41 bis 44) aufweist, die in der Schicht (1) eine ebensolche Anzahl von getrennten Zonen (30 bis 36) definieren, die selektiv erwärmt werden können.

**15.** Thermomagnetischer Aufzeichnungskopf nach Anspruch 13, dadurch gekennzeichnet, daß er eine bestimmte Anzahl von Heizelektroden (41 bis 44) aufweist, die fluchtend und parallel zueinander angeordnet sind.

**16.** Thermomagnetischer Aufzeichnungskopf nach Anspruch 13, dadurch gekennzeichnet, daß ein erstes Ende jeder Elektrode (41 bis 44) an einen gemeinsamen Eingangsanschluß (eC) angeschlossen ist und daß ein zweites Ende jeder Elektrode (41 bis 44) einen eigenen Eingangsanschluß (e41 bis e44) besitzt.

**17.** Thermomagnetischer Aufzeichnungskopf nach Anspruch 13, dadurch gekennzeichnet, daß jede Elektrode (41) einen Abschnitt einer bestimmten Länge (a) aufweist, der einen größeren Widerstand als der Rest der Elektrode (41) besitzt.

**18.** Thermomagnetischer Aufzeichnungskopf nach Anspruch 13, dadurch gekennzeichnet, daß jede Elektrode einen Ausschnitt einer bestimmten Länge (a) besitzt, der der Elektrode in diesem Bereich einen größeren Widerstand verleiht.

**19.** Thermomagnetischer Aufzeichnungskopf nach Anspruch 13, dadurch gekennzeichnet, daß jede Elektrode (41) eine Unterbrechung einer bestimmten Länge (a) besitzt, derart, daß der elektrische Strom, der in eine Elektrode eingespeist wird, in die Schicht (1) eindringt und eine Erwärmung bewirkt.

**20.** Thermomagnetischer Aufzeichnungskopf nach einem beliebigen der Ansprüche 12 bis 18, dadurch gekennzeichnet, daß er ein monolithisches Element vom IC-Typ (19) aufweist, das Steuerkreise für den Aufzeichnungskopf enthält und auf seiner Oberfläche Anschlüsse (b41) an diese Steuerkreise besitzt, wobei eine bestimmte Anzahl von Heizelektroden (41 bis 44) auf einer ebenen Oberfläche des monolithischen Elements vom IC-Typ (19) angeordnet sind und jede Elektrode (41) an mindestens einen Anschluß (b41) angeschlossen ist, und daß der Kopf weiter eine Schicht (1) aus ferromagnetischem Material besitzt, die auf die Elektroden (41 bis 44) aufgebracht ist.

**21.** Thermomagnetischer Aufzeichnungskopf nach einem beliebigen der vorhergehenden Ansprüche, dadurch gekennzeichnet, daß die Schicht (1) aus ferromagnetischem Material mindestens eine erste und eine zweite daran anschließende Zone aus ferromagnetischen Materialien besitzt, die eine hohe bzw. niedrige Curiepunkttemperatur besitzen, wobei die Heizmittel (Lichtquelle 2 oder Heizelektrode 41 bis 44) die Schicht mit niedrigerem Curiepunkt auf eine Temperatur bringen, die über dieser niedrigen Curietemperatur liegt, so daß sich kurzzeitig ein Magnetspalt ergibt, während das Material mit höherem Curiepunkt nur unzureichend erwärmt wird und magnetisch bleibt, wobei die Magnetisierung, die dieses magnetische Material besitzt, ein Streufeld in Höhe des so gebildeten Magnetspalts erzeugt, dessen man sich zum Beschreiben eines vorbeilaufenden Magnetträgers bedienen kann.

22. Thermomagnetischer Aufzeichnungskopf nach einem beliebigen der Ansprüche 12 bis 20, dadurch gekennzeichnet, daß jede Elektrode eine Linearelektrode ist und daß die Schicht (1) unter jeder Elektrode ein Band (3) aus ferromagnetischem Material senkrecht zu den Elektroden aufweist, dessen Curiepunkttemperatur abgesenkt wurde, so daß die Erwärmung einer Elektrode die Entmagnetisierung nur in dem Band (3) der Schicht (1) im Kreuzungspunkt dieses Bands und der geheizten Elektrode bestimmt.

23. Thermomagnetischer Aufzeichnungskopf nach einem der Ansprüche 1 oder 12, dadurch gekennzeichnet, daß das ferromagnetische Material der Schicht (1) eine Curiepunkttemperatur unter 150° C hat.

24. Thermomagnetischer Aufzeichnungskopf nach einem der Ansprüche 1 oder 12, dadurch gekennzeichnet, daß die Magnetisierung der Schicht (1) aus ferromagnetischem Material bei nicht vorliegender Erwärmung in der Ebene der Schicht (1) ausgerichtet ist.

25. Thermomagnetischer Aufzeichnungskopf nach einem der Ansprüche 1 oder 12, dadurch gekennzeichnet, daß die Magnetisierung der Schicht (1) aus ferromagnetischem Material bei nicht vorliegender Erwärmung senkrecht zur Ebene der Schicht (1) ausgerichtet ist.

26. Thermomagnetischer Aufzeichnungskopf nach Anspruch 24, dadurch gekennzeichnet, daß in der Schicht (1) für jede Zone (3), die erwärmt werden kann, die Magnetisierung bei nicht vorliegender Erwärmung der des Rests der Schicht entgegengerichtet ist.

27. Thermomagnetischer Aufzeichnungskopf nach Anspruch 24, dadurch gekennzeichnet, daß in der Schicht (1) jede Zone (3), die erwärmt werden kann, eine Grenze besitzt, die bei nicht vorliegender Erwärmung zwei zur Magnetisierung der Schicht entgegengesetzte Orientierungsrichtungen besitzt.

28. Thermomagnetischer Aufzeichnungskopf nach einem der Ansprüche 1 und 12, dadurch gekennzeichnet, daß er einen Magnet (50) aufweist, der auf der Seite der ersten Oberfläche (10) der Schicht (1) liegt, wobei der magnetische Aufzeichnungsträger (5) zwischen der ersten Oberfläche (10) und dem Magneten (50) liegt und letzterer ein im Vergleich zur Koerzitivkraft des Aufzeichnungsträgers sehr schwaches Feld erzeugt und es erlaubt, die Magnetisierung der Schicht (1) auszurichten.

29. Verfahren zur Herstellung eines thermomagnetischen Aufzeichnungskopfes nach Anspruch 12, dadurch gekennzeichnet, daß es folgende Verfahrensschritte enthält:
   - a) Aufbringen einer Schicht eines thermomagnetischen Materials (1) auf ein Substrat (9);
   - b) Aufbringen von Heizelektroden (41 bis 44) auf eine Oberfläche eines monolithischen Elements vom IC-Typ (19);
   - c) Zusammenbau des aus der ferromagnetischen Materialschicht (1) und dem Substrat (9) bestehenden Bauteils mit dem aus den Heizelektroden (41 bis 44) und dem monolithischen Element (19) bestehenden Bauteil, derart, daß die Schicht aus ferromagnetischem Material mit den Heizelektroden (41 bis 44) in Kontakt steht;
   - d) Entfernung des Substrats (9).

30. Verfahren zur Herstellung eines thermomagnetischen Aufzeichnungskopfs nach Anspruch 29, dadurch gekennzeichnet, daß es nach dem Aufbringen der Schicht aus ferromagnetischem Material (1) einen Verfahrensschritt aufweist, in dem die Temperatur des Curiepunkts eines zu den Heizelektroden (41 bis 44) senkrecht verlaufenden Bandes (3) der Schicht aus ferromagnetischem Material (1) abgesenkt wird.

# FIG_1

# FIG_2

# FIG_3

FIG_4

FIG_5

FIG_6

FIG_7

# FIG_8

# FIG_9

# FIG_10

# FIG_11

# FIG_12

# FIG_13

20

# FIG_14

# FIG_15

# FIG_16

# FIG_17

# FIG_18

# FIG_19